# FASCICULE DE BREVET EUROPEEN

(11) **EP 3 724 052 B1**
(45) Date de publication et mention de la délivrance du brevet: **04.08.2021**
(21) Numéro de dépôt: 18821704.6
(22) Date de dépôt: 08.11.2018
(51) Int. Cl.: B60W 20/16, F01N 13/00, F01N 3/021, F01N 3/023, F02D 41/02, F01N 3/20, F01N 9/00, F01N 3/10, B60W 10/06, B60W 10/08, B60K 6/52

(54) **SYSTÈME ET PROCÉDÉ DE PILOTAGE DE LA TEMPÉRATURE D'UN CATALYSEUR ET D'UN FILTRE À PARTICULES D'UNE LIGNE D'ÉCHAPPEMENT DE VÉHICULE, ET VÉHICULE AUTOMOBILE LES INCORPORANT**
SYSTEM UND VERFAHREN ZUR REGELUNG DER TEMPERATUR EINES KATALYSATORS UND EINES PARTIKELFILTERS EINER FAHRZEUGABGASLEITUNG UND KRAFTFAHRZEUG DAMIT
SYSTEM AND METHOD FOR CONTROLLING THE TEMPERATURE OF A CATALYST AND A PARTICLE FILTER OF A VEHICLE EXHAUST LINE, AND MOTOR VEHICLE COMPRISING SAME

(30) Priorité: 15.12.2017 FR 1762232
(43) Date de publication de la demande: 21.10.2020
(73) Titulaire: PSA Automobiles SA, 78300 Poissy (FR)
(72) Inventeur: MILHAU, Yohan, 78630 Orgeval (FR); DUBILLARD, Frédöric, 78600 Maisons-Laffitte (FR)
(86) Numéro de dépôt international: PCT/FR2018/052759
(87) Numéro de publication internationale: WO 2019/115892

(56) Documents cités:
- EP-A1- 1 316 694
- WO-A1-2014/188870
- DE-A1-102016 207 667
- FR-A1- 2 956 878
- FR-A1- 2 982 317
- US-A1- 2013 231 809
- US-A1- 2015 298 687

## Description

L'invention a pour objet un système de pilotage de la température d'un catalyseur et d'un filtre à particules d'une ligne d'échappement de véhicule à motorisation hybride. Plus particulièrement, l'invention entend proposer une solution pour gérer de façon optimum la température de tels catalyseurs et filtres à particules équipant les véhicules, placés à l'heure actuelle dans la ligne d'échappement des gaz de combustion émis par le moteur thermique d'un véhicule.

Dans la suite, l'invention est présentée en lien avec l'une de ces applications, plus précisément une application à un véhicule automobile à hybridation électrique, c'est-à-dire comportant un moteur thermique et au moins un moteur électrique associé à des moyens de stockage d'énergie.

Toutefois, il doit être noté que la présente invention n'est pas limitée à l'utilisation d'une machine électrique dans un véhicule hybride, le véhicule pouvant par exemple comporter une chaîne de transmission comprenant au moins un moteur thermique et au moins une machine (ou moteur) hydraulique ou encore à air comprimé.

Dans le cadre de la réduction des émissions polluantes liées au fonctionnement des moteurs thermiques des véhicules automobiles, les normes légales ont amené les constructeurs à intégrer dans la ligne d'échappement de ces moteurs plusieurs sortes de dispositifs catalytiques ainsi que divers types de filtres à particules pour la dépollution des gaz de combustion desdits moteurs.

Le catalyseur d'échappement ou pot catalytique ainsi que les filtres à particules jouent un rôle important dans le système d'échappement d'une voiture. Il a ainsi pour but de minimiser la pollution pour mieux respecter l'environnement en réduisant les gaz d'échappement.

L'efficacité de traitement d'un catalyseur, qui est définie pour chaque type de polluant (HC, CO ou NOx) comme le taux de conversion de la quantité de polluant qui entre dans le catalyseur, dépend en premier lieu de la température du catalyseur. On sait que le taux de conversion commence à atteindre des valeurs acceptables, par exemple comprises par exemple entre 50% et 90%, lorsque la température du catalyseur est au moins égale à sa température d'amorçage, soit par exemple une température comprise entre environ 250°C et 300°C. Ces températures sont couramment atteintes et dépassées lors du fonctionnement en continu d'un moteur thermique.

Les filtres à particules fonctionnent quant à eux en bloquant les particules traversant leurs canaux et doivent être régénérés régulièrement pour éliminer les particules qui tendent à obstruer les canaux du filtre. L'élimination des particules s'effectuent généralement par combustion en chauffant le filtre à une température au moins égale à la température de seuil de régénération du filtre à particules.

Au démarrage, le temps d'amorçage d'un catalyseur varie généralement entre 30 et 40 secondes, le filtre à particules atteignant sa température de seuil de régénération dans un laps de temps généralement (mais pas nécessairement) supérieur. Les stratégies utilisées sur les véhicules conventionnels (non hybride) imposent un démarrage du moteur thermique lors de sa mise en action. En cas de demande de puissance motrice instantanée de la part du conducteur, l'utilisation du moteur thermique va être demandée, ainsi les émissions de polluants ne sont pas maitrisées durant cette phase d'amorçage.

Avec un véhicule hybride, et en particulier rechargeable (la machine électrique fonctionnant alors en mode « génératrice » dans lequel elle devient un alternateur qui fournit un courant électrique destiné à être stocké dans une batterie d'accumulateurs), le démarrage à la mise en action n'est pas souhaitable car le système électrique peut généralement réaliser la traction.

De plus, avec les véhicules hybrides, une fois le moteur chaud, le roulage électrique peut être suffisamment long pour laisser refroidir la ligne d'échappement de sorte qu'il se produit un désamorçage du catalyseur ayant des impacts négatifs sur les polluants associés.

Il n'existe pas à l'heure actuelle de système permettant de gérer de façon optimum à la fois la température du catalyseur (en vue de son amorçage et de la conservation de cet état) et celle du filtre à particules (afin de pouvoir procéder à sa régénération si son niveau de charge le nécessite) ainsi que la gestion des couples moteur thermique et électrique au regard d'une part de la demande de puissance motrice instantanée de la part du conducteur (toujours prioritaire) et d'autre part d'une utilisation optimisée du couple électrique vis-à-vis du couple moteur (thermique) afin de réduire au maximum l'utilisation de carburant fossile.

De ce point de vue, on connaît des brevets qui proposent des solutions qui ne sont pas satisfaisantes en ce qu'elles s'occupent uniquement soit de la gestion du catalyseur, soit de celle du filtre à particule, sans optimiser l'utilisation de la machine électrique au regard du couple moteur (thermique). Ainsi, les brevets FR 2982316 et FR 2925938 s'intéressent à la régénération du filtre à particules d'un véhicule hybride tandis que le brevet EP 987139 décrit un procédé d'adaptation de la gestion du fonctionnement d'un moteur auxiliaire en fonction de la température détectée du catalyseur.

WO 2014/188870 A1 décrit un système de gestion de la température d'une ligne d'échappement pour véhicule hybride comportant un catalyseur d'oxydation suivi d'un filtre à particules dans lequel la température du filtre à particules est élevée au-dessus du seuil de régénération lorsque la charge en particules du filtre dépasse une valeur limite.

La présente invention a notamment pour but d'éviter ces inconvénients de la technique antérieure et de proposer un système complet de pilotage de la température d'un catalyseur et d'un filtre à particules d'une ligne d'échappement de véhicule hybride permettant de gérer le plus efficacement possible, sans nécessiter de changements structurels, le groupe motopropulseur afin de minimiser l'utilisation des leviers du moteur thermique pour la gestion d'un catalyseur (afin de le conserver en mode « actif » dans lequel il réduit les gaz nocifs) et d'un filtre à particules en vue de sa régénération.

Dans ce but, la présente invention propose un système de pilotage de la température d'un catalyseur et d'un filtre à particules d'une ligne d'échappement de véhicule à motorisation hybride, comportant :
- un moteur thermique ;
- au moins une autre source motrice ;
- un catalyseur destiné au traitement des émissions polluantes provenant du moteur thermique, ledit catalyseur présentant une température d'amorçage à partir de laquelle ledit catalyseur est en mode actif dans lequel ledit traitement est réalisé ;
- un filtre à particules destiné au traitement des émissions polluantes provenant du moteur thermique, ledit filtre présentant une température de régénération au-delà de laquelle une combustion desdites particules est possible, le filtre à particules et le catalyseur étant chauffés lors de l'utilisation du moteur thermique, et
- un moyen d'analyse et de commande configuré pour déterminer un niveau de charge en particules du filtre à particules ainsi qu'une température dudit catalyseur et dudit filtre, le moyen d'analyse et de commande étant configuré pour piloter la température du catalyseur, en fonction d'une demande de puissance motrice instantanée de la part du conducteur et d'une sollicitation de l'autre source motrice, de sorte qu'elle est toujours au moins égale à la température d'amorçage et, lorsqu'un seuil de niveau de charge en particules du filtre à particules est déterminé comme atteint, le moyen d'analyse et de commande est configuré pour commander le moteur thermique de manière à ce que le filtre à particules atteigne la température de régénération afin d'être régénéré.

Dans le cadre de la présente invention, on entend par l'expression « sollicitation de l'autre source motrice » le fait que, pour répondre à une demande de puissance motrice instantanée de la part du conducteur, l'autre source motrice est sollicitée en complément du couple du moteur thermique ou sans le couple du moteur thermique, sauf les cas où la stratégie lié au filtre à particules et/ou au catalyseur commande une utilisation prioritaire du moteur thermique par rapport à l'autre source motrice.

On notera que cette invention s'applique quelle que soit la position du catalyseur par rapport au filtre à particules, y compris lorsque le catalyseur est imprégné ou déposé en couches dans ou sur les parois internes du filtre à particules.

Une fois la température de régénération du filtre à particules atteinte, le moyen d'analyse et de commande va commander un apport d'oxygène dans la ligne d'échappement, et en particulier au niveau du filtre à particules, de sorte que les particules prisonnières dudit filtre puissent être brûlées et donc ce dernier régénéré.

Grâce à l'invention, il est dorénavant possible d'optimiser le pilotage du groupe motopropulseur (GMP) par la gestion des points de fonctionnement de chacun des organes producteurs de couple, permettant ainsi de conserver le catalyseur chaud (à une température au moins égale à sa température d'amorçage) en prévision d'un long roulage avec le moteur thermique éteint tout en assurant la régénération du filtre à particules dès que le niveau de charge en particules atteint un certain niveau prédéfini dans le moyen d'analyse et de commande.

En outre, tout en respectant les normes d'émissions de gaz polluants, le système selon l'invention permet de minimiser la consommation de carburant fossile.

Enfin, grâce au système selon l'invention, on peut réaliser un gain économique car, du fait de son processus optimisé de gestion de la température du catalyseur et du filtre à particules, un dimensionnement important (nombre élevé de pains) de ces derniers ou l'utilisation d'un appareil performant mais couteux n'est plus une nécessité, autrement dit un catalyseur ou un filtre à particules classique pour véhicule hybride est parfaitement envisageable/utilisable.

On entend par l'expression « moyen d'analyse et de commande » un système embarqué équipant à l'heure actuelle les véhicules, notamment ceux du type à motorisation hybride, et qui a pour fonction d'analyser, enregistrer/stocker des informations/données, contrôler (notamment via des capteurs) et commander les différents organes fonctionnels d'un véhicule. Un tel moyen est bien connu de l'homme du métier. On notera que, de façon classique, le moyen d'analyse et de commande est relié à l'ensemble des capteurs ou analogues du véhicule, ce qui lui permet de mesurer, ou de calculer, des paramètres extérieurs tels que la température extérieure, l'altitude ou une pente (via une géo-localisation), ou encore des caractéristiques propres au véhicule telles que la température du catalyseur ou le niveau de charge du bloc batterie (le stockeur d'énergie de l'autre source motrice). Ces capteurs ou analogues sont ainsi considérés comme partie intégrante du moyen d'analyse et de commande du système selon l'invention.

On entend par l'expression « mode actif » relativement au catalyseur le fait que, lorsqu'il se trouve dans cet état, ce dernier traite efficacement les gaz d'échappement selon son emploi.

On entend par l'expression « demande de puissance motrice instantanée de la part du conducteur », la volonté du conducteur d'accélérer ou de freiner le déplacement du véhicule. Cette demande de puissance motrice instantanée de la part du conducteur s'exprime en puissance (Watt, noté de façon abrégé W), mais à une vitesse et une masse donnée du véhicule s'exprime de façon équivalente en couple (Newton mètre, noté de façon abrégé Nm), en accélération (en mètre par seconde au carré, soit m.s⁻²) et dépend principalement, par exemple, des positions d'une pédale d'accélération et d'une pédale de frein, de l'état d'un levier de vitesse d'une boîte de vitesses, du mode de conduite sélectionné, de la vitesse du véhicule et/ou des aides à la conduite. Ici, cette demande de puissance motrice instantanée de la part du conducteur est exprimée en puissance, et non en couple, à l'instar notamment de la réserve de puissance constituée dans le stockeur d'énergie.

On notera que la présente invention entend s'adapter à tous types d'architectures de véhicules concernant le filtre à particules et le catalyseur. En effet, la nature et l'emplacement dans la ligne d'échappement de ces deux éléments sont extrêmement variables et peut varier considérablement d'un véhicule hybride à l'autre. Ainsi, il est possible, en fonction de l'emplacement dans la ligne d'échappement et de leurs natures, que les températures d'amorçage du catalyseur (ainsi que sa température de seuil en vue d'une apnée électrique, sans contribution du moteur thermique) ainsi que la température de régénération du filtre à particules soient très différentes, tantôt l'une, température d'amorçage, sera supérieure à l'autre, température de régénération, ou l'inverse. Dans son acceptation la plus large telle qu'énoncé ci-dessus, le système de pilotage selon l'invention prévoit ces différentes situations.

Avantageusement, le moyen d'analyse et de commande est configuré pour piloter la température du catalyseur, en fonction d'une demande de puissance motrice instantanée de la part du conducteur et d'une sollicitation de l'autre source motrice, de sorte qu'elle atteigne une température de seuil du catalyseur, ladite température de seuil atteinte autorisant, via une commande par le moyen d'analyse et de commande, l'arrêt du chauffage du catalyseur pendant une durée t tout en le maintenant en mode actif.

Avantageusement, les susdites températures d'amorçage, de régénération et de seuil sont prédéfinies et stockées dans le moyen d'analyse et de commande. Plus précisément, le moyen d'analyse et de commande dispose d'une ou plusieurs mémoires (ou moyens de mémorisation) lui permettant de stocker ce type de données.

Avantageusement, la durée prédéterminée t (pendant laquelle on réalise une apnée électrique, c'est-à-dire que le véhicule hybride fonctionne uniquement avec l'autre source motrice) est variable.

On notera ici que la température d'amorçage et la température de seuil du catalyseur sont variables en fonction de divers paramètres, comme par exemple un vieillissement (le nombre de cycle d'utilisation) du catalyseur, l'altitude (par rapport au niveau de la mer) du véhicule ou encore une température climatique.

La durée prédéterminée t pendant laquelle il est possible de se passer du moteur thermique pour chauffer la ligne d'échappement, et en particulier le catalyseur, est variable mais peut durer au moins plusieurs minutes et jusqu'à une heure, voire un peu plus si les conditions d'environnement (température extérieure et altitude en particulier) le permettent. Bien entendu, même s'il est possible de maintenir le moteur thermique éteint, ce dernier sera de nouveau utilisé si la seule machine électrique ne peut satisfaire la demande de puissance motrice instantanée de la part du conducteur.

De préférence, la variabilité de la durée prédéterminée t est fonction de la température extérieure, de l'altitude et/ou de la nature du catalyseur.

Selon une caractéristique propre à l'invention, la durée prédéterminée t est comprise entre 3 minutes et 60 minutes.

De préférence, le seuil de niveau de charge en particules du filtre à particules est au moins égal à 70% de la capacité de charge maximum du filtre à particules.

De préférence, l'autre source motrice consiste en au moins un moteur électrique.

Dans le même but, la présente invention propose également un véhicule automobile hybride comportant au moins un système de pilotage tel que succinctement décrit ci-dessus.

Toujours dans le même but, la présente invention propose un procédé de pilotage de la température d'un catalyseur et d'un filtre à particules de véhicule à motorisation hybride, dans lequel :
- un catalyseur destiné au traitement des émissions polluantes provenant du moteur thermique, ledit catalyseur présentant une température d'amorçage à partir de laquelle ledit catalyseur est en mode actif dans lequel ledit traitement est réalisé; et
- un filtre à particules provenant du moteur thermique, ledit filtre présentant une température de régénération destinée à permettre la combustion desdites particules,
sont chauffés lors de l'utilisation d'un moteur thermique,
on pilote la température du catalyseur, en fonction d'une demande de puissance motrice instantanée de la part du conducteur et d'une sollicitation de l'autre source motrice, de sorte qu'elle est toujours au moins égale à la température d'amorçage et, lorsqu'un seuil de niveau de charge en particules du filtre à particules est déterminé comme atteint, on commande le moteur thermique de manière à ce que le filtre à particules atteigne la température de régénération afin d'être régénéré.

Les avantages du procédé et du véhicule automobile hybride conformes à l'invention étant similaires à ceux du système de pilotage du de la régénération d'un filtre à particules de véhicule à motorisation hybride énumérés plus haut, ils ne sont pas répétés ici.

D'autres aspects et avantages de l'invention apparaîtront à la lecture de la description qui suit d'un mode particulier de réalisation, donné à titre d'exemple non limitatif et en référence aux dessins qui l'accompagnent, dans lesquels :
- la figure 1 est un schéma d'un véhicule hybride selon un mode de réalisation du système selon l'invention ;
- la figure 2 est un schéma illustrant différents états (0, 1, 2 et 3) du filtre à particules ainsi que les stratégies A, B et C susceptible d'être mises en œuvre pour le catalyseur selon un mode d'exécution du système et du procédé de l'invention ;
- la figure 3 est un autre schéma illustrant les différentes actions ou stratégies de gestion du groupe motopropulseur (Ao, A₁, A₂, A₃, A₄, A₅ et A₆) en fonction d'une part de la charge du filtre à particules et de sa température ;
- la figure 4 est un organigramme illustrant les étapes du procédé de pilotage de la température d'un catalyseur et d'un filtre à particules selon un mode de réalisation de l'invention ;
- la figure 5 illustre un exemple d'exécution d'une action ou stratégie de gestion du groupe motopropulseur (GMP) dans les cas (ou phases) notés A₂ et A₄ présentés sur la figure 3 ;
- la figure 6 illustre un autre exemple d'exécution d'une action ou stratégie de gestion du groupe motopropulseur (GMP) dans les cas notés A₂ et A₄ présentés sur la figure 3.

A nouveau, il est rappelé que l'invention est illustrée ici dans un exemple avec un véhicule hybride électrique mais la machine électrique peut être remplacée par exemple par une technologie pneumatique ou hydraulique, de préférence hydraulique.

Par ailleurs, il doit être noté que la présente invention n'entend pas modifier le catalyseur ou le filtre à catalyseur utilisé classiquement pour un véhicule à motorisation hybride, voire pour un véhicule conventionnel. En outre, l'invention ne prévoit aucune modification, ajout ou suppression, au niveau de la structure ou de l'architecture du véhicule, plus précisément dans la ligne d'échappement.

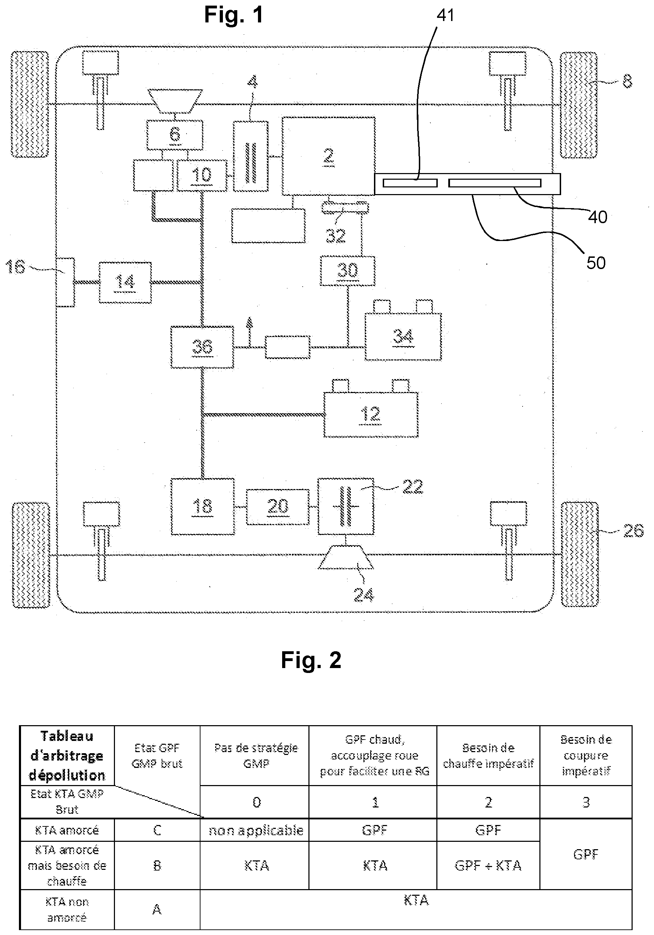

La figure 1 présente un véhicule automobile, pouvant servir à illustrer l'invention, comprenant par exemple les équipements et organes suivants.

Cette figure présente un véhicule hybride comportant un moteur thermique 2 entraînant par un embrayage 4 piloté de manière automatique, une transmission 6 présentant différents rapports de vitesse, reliée aux roues avant motrices 8 de ce véhicule.

Une ligne d'échappement 50 dispose de moyens aptes à traiter les gaz d'échappement, dont notamment les imbrulés, provenant de la chambre de combustion du moteur thermique 2. Dans le cadre de la présente invention, ces moyens, prévus dans la ligne d'échappement 50, consistent plus particulièrement en un catalyseur 40 et un filtre à particules 41.

L'arbre d'entrée de la transmission 6 recevant le mouvement de l'embrayage 4, comporte une machine électrique avant de traction 10 alimentée par une batterie basse tension de traction 12. De cette manière la machine électrique avant 10 peut délivrer un couple sur les roues motrices 8 sans passer par l'embrayage 4, en utilisant les différents rapports de vitesse proposés par la transmission 6.

Un chargeur embarqué 14 peut être relié par une prise extérieure 16 à un réseau de distribution d'électricité, pour recharger la batterie de traction 12 quand le véhicule est à l'arrêt. La batterie de traction 12 présente une basse tension, qui peut être par exemple de 220 ou 300 Volts (V).

La batterie de traction 12 alimente aussi une machine électrique arrière de traction 18 reliée successivement par un réducteur 20 et un système de crabotage 22, à un différentiel arrière 24 répartissant le mouvement vers les roues arrière du véhicule 26.

Un alternateur, également désigné alterno-démarreur, 30 relié en permanence par une courroie 32 au moteur thermique 2, alimente un réseau de bord 34 comportant une batterie très basse tension. En complément la batterie du réseau de bord 34 peut être chargée par un convertisseur de tension continue DC/DC 36, recevant une énergie électrique de la batterie de traction 12, ou d'une machine électrique avant 10 ou arrière 18 si le niveau d'énergie de cette batterie de traction est insuffisant.

Lors des freinages du véhicule ou d'un relâchement de la pédale d'accélérateur, les machines électriques 10, 18 travaillent en génératrice en délivrant un couple de freinage, pour recharger la batterie de traction 12 et récupérer une énergie.

Un moyen d'analyse et de commande, non représenté sur les figures annexées, contrôle le fonctionnement de ce groupe motopropulseur pour répondre aux demandes du conducteur tout en optimisant les consommations d'énergie et les émissions de gaz polluants selon des stratégies classiques.

Dans cet exemple d'exécution, la batterie de traction 12 constitue le stockeur d'énergie selon l'invention tandis que l'ensemble formé par la machine électrique avant de traction 10 et la machine électrique arrière de traction 18 constitue l'autre source motrice (hybride) selon l'invention.

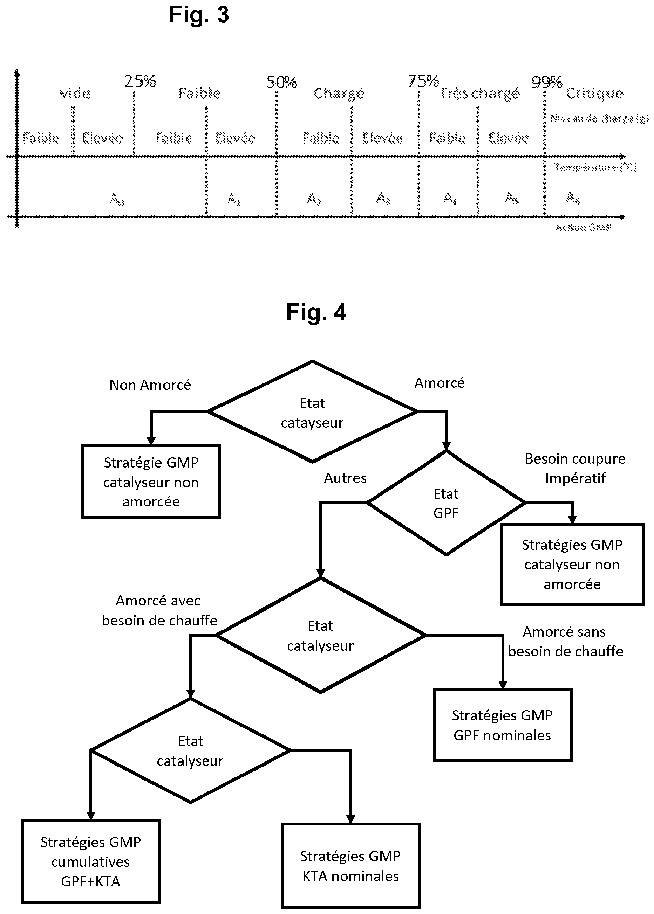

La figure 2 est un tableau à lire de façon matricielle, récapitulant des cas de mises en œuvre des stratégies par le système et le procédé selon l'invention. Il utilise d'une part des états A, B et C du catalyseur 40 et d'autre part des états 0, 1, 2 et 3 du filtre à particules 41. Ce tableau conduit à sept stratégies différentes selon l'invention, notées A₀ à A₆ et qui seront détaillées par la figure 3.

Les figures 2 et 3 sont liées, et doivent être regardées simultanément.

Ces sept stratégies différentes sont donc sélectionnées en fonction des cas de mises en œuvre de ce tableau matriciel, ces cas étant notés C0, C1, C2, C3, B0, B1, B2, B3, et Ax, Ax désignant A0, A1, A2, A3.

Sur cette figure 2, les abréviations GMP, KTA, GPF et RG signifient respectivement le groupe motopropulseur, le catalyseur 40, le filtre à particules 41 et la régénération du filtre à particules 41.

Concernant les états A, B et C, comme indiqué sur la figure 2, ils correspondent respectivement à :
- état A : un état non amorcé du catalyseur 40, cet état non amorcé correspondant à une température du catalyseur 40 inférieure à sa température d'amorçage
- état B : un état amorcé du catalyseur 40 mais pour lequel un besoin de chauffe supplémentaire est souhaitable, la température du catalyseur 40 étant supérieure à sa température d'amorçage mais étant inférieure à sa température de seuil lui permettant de rester en mode actif, i.e. amorcé, moteur thermique 2 éteint,
- état C : un état amorcé dans lequel la température du catalyseur 40 est au moins égale à la température de seuil.

Les états 0 à 3 du filtre à particules 41 sont décrits ultérieurement.

Sur la figure 3, on a représenté la charge du filtre à particules 41 en fonction d'une température du filtre à particules 41. La température du filtre à particules 41 est dite faible lorsqu'elle est en-dessous de sa température de régénération, et elle est dite élevée lorsqu'elle est égale ou au-dessus de cette même température de régénération. Concernant le niveau de charge en particules du filtre à particules 41, on l'exprime ici en pourcentage de charge par rapport à un remplissage maximal dudit filtre mais on pourra également exprimer cette charge avec un poids ou une masse de particules. Ainsi, le seuil de 25% de charge en particules, visible sur cette figure, pourra correspondre à 2,5 grammes de particules, 50% à 5 grammes et ainsi de suite.

Outre la température du catalyseur 40 et l'atteinte de sa température d'amorçage, l'invention utilise les mesures de température du filtre à particules 41 et celles relatives à son niveau de charge en particules pour déterminer quelle stratégie adoptée afin de régénérer le filtre, tout en optimisant la combustion de carburant fossile, c'est-à-dire en utilisant au minimum le moteur thermique 2.

Ainsi, dans le mode d'exécution choisi ici pour illustrer l'invention, sept actions ou stratégies, notées A₀ à A₆, sont définis et en fonction de chacune d'elle, une réponse appropriée va être mise en œuvre par le système selon l'invention.

Dans la stratégie A₀, le filtre à particules 41 est vide ou faiblement chargé (en particules) et froid. Dans cette situation, le système et procédé selon l'invention n'applique aucun levier (ou stratégie) au groupe motopropulseur (GMP).

Dans la stratégie A₁, le filtre à particules 41 est faiblement chargé et suffisamment chaud pour s'auto-régénérer en cas d'apport d'oxygène. La stratégie A₁ du système selon l'invention pour le groupe motopropulseur associée à cet état est de démarrer et de coupler le moteur thermique 2 aux roues du véhicule. Ainsi en cas de décélération du véhicule suffisamment importante demandé par le conducteur, le moteur sera mis en mode de coupure injection de carburant. Cette phase de coupure injection de carburant permettra l'apport d'oxygène dans le filtre à particules 41 et donc d'amorcer sa régénération.

Dans les stratégies A₂ et A₄, le filtre à particules 41 est chargé ou très chargé et n'est pas suffisamment chaud pour s'auto-régénérer en cas d'apport d'oxygène. L'objectif des stratégies A₂ et A₄ du système et du procédé selon l'invention est donc de chauffer le filtre à particules 41 le plus rapidement possible.

Ainsi, au niveau du groupe motopropulseur, le moteur thermique 2 est allumé et couplé aux roues. Le moyen d'analyse et de commande tente alors de demander un couple minimal, impliquant, en cas de faible volonté du conducteur (la pédale d'accélération n'étant pas suffisamment enfoncée), une recharge électrique (autrement dit le bloc batterie se charge). Si la température du filtre à particules 41 n'arrive pas à monter, le moyen d'analyse et de commande peut décider d'appliquer tout ou partie des leviers conventionnellement utilisé pour aider à chauffer ledit filtre.

L'état 0 du filtre à particules 41 dans le tableau de la figure 3 correspond aux stratégies A₀, A₅ et A₆ susvisées. L'état 1 du filtre à particules 41 dans le tableau de la figure 2 correspond à la stratégie A₁ susvisée. L'état 2 du filtre à particules 41 dans le tableau de la figure 2 correspond aux stratégies A₂ et A₄ susvisées et l'état 3 du filtre à particules 41 dans ce même tableau correspond à la stratégie A₃ susvisée.

Ci-après, le tableau récapitulatif du système (et du procédé) de pilotage de la température du catalyseur 40 et du filtre à particules 41 est précisé :
- Ax (A0, A1, A2 et A3) : KTA (catalyseur 40), soit lorsque le catalyseur 40 n'est pas amorcé.

La priorisation est entièrement donnée au catalyseur 40 : le temps d'amorçage d'un catalyseur 40 est généralement inférieur à une minute. Durant ce temps, le filtre à particules 41 n'aura pas le temps de chauffer ou de se régénérer.
- C0 : soit le cas noté « non applicable » dans le tableau.

Le catalyseur 40 est amorcé, le filtre à particules 41 n'est pas chargé. Il n'y a pas de stratégie appliqué pour le groupe motopropulseur et donc pas d'arbitrage nécessaire.
- B0 : KTA.

Le catalyseur 40 est amorcé mais il subsiste un besoin de chauffe, le filtre à particules 41 n'est pas chargé. La stratégie appliquée pour le groupe motopropulseur est la stratégie utilisée classiquement lorsque le catalyseur 40 est amorcé mais qu'il subsiste un besoin de chauffe.
- Cx (C1, C2 et C3) : GPF (filtre à particules 41).

Le catalyseur 40 est amorcé avec sa température au moins égale à sa température de seuil, l'application des stratégies à appliquer au filtre à particules 41 est réalisée normalement, c'est-à-dire en fonction de son niveau de charge en particules et de sa température.

Comme il a été exposé précédemment, la détection d'un seuil de charge en particules au niveau du filtre à particules 41 va déclencher la montée en température dudit filtre afin de l'amener à sa température de régénération pour pouvoir le régénérer, notamment par un apport accru en oxygène afin de déclencher la combustion des particules. Ce seuil de niveau de charge en particules n'est pas défini dans la présente invention car il est possible de la définir ou de le paramétrer, dans le moyen d'analyse et de commande, de façon variable. Ainsi, il pourra par exemple être fixé à 25% de la charge maximum en particules, à 50% ou à 70% voire 80%, tout dépendant du choix du constructeur ou du conducteur, tout en sachant par exemple qu'un filtre à particules 41 récent peut tolérer un contenu plus important de charge (en particules) par rapport à un filtre à particules 41 vieillissant.
- B1 : KTA.

Le catalyseur 40 est amorcé mais il subsiste un besoin de chauffe pour atteindre la température de seuil, le filtre à particules 41 est légèrement chargé et prêt à être régénéré en cas de présence/apport d'oxygène. Ce cas présente un conflit. On a besoin de chauffer le catalyseur 40 pour ne pas qu'il se désamorce, mais on a également besoin d'apporter de l'oxygène au filtre à particules 41 ce qui risque de refroidir le catalyseur 40 et donc de le désamorcer. De façon générale, on priorise dans ce cas-là le catalyseur 40, car le filtre à particules 41 n'est pas forcément chargé de façon trop importante et sa régénération peut se faire à un niveau de charge en particules supérieur dans la mesure où le seuil de déclenchement de la régénération n'a pas été fixé trop élevé, auquel cas la régénération pourra être prioritaire (par exemple si le seuil de charge en particules a été fixé à 75%).
- B2 : GPF.

Le catalyseur 40 est amorcé mais il subsiste un besoin de chauffe, le filtre à particules 41 est chargé mais n'est pas en mesure de se régénérer car sa température n'est pas élevée. Dans cette situation, le couple minimal imposé au moteur thermique 2 sera égal au maximum entre le couple minimal imposé pour des besoins de chauffe du catalyseur 40 et le couple minimal imposé pour des besoins de chauffe du filtre à particules 41.

Pour chauffer, le moyen d'analyse et de commande impose donc un couple minimal du moteur thermique 2, soit un maximum entre le couple minimum du filtre à particules 41 et du catalyseur 40.

La figure 4 illustre le principe général du système et du procédé selon l'invention. Sur cette figure, les abréviations KTA et GPF sont à nouveau utilisées pour signifier respectivement le catalyseur 40 et le filtre à particules 41.

Tout d'abord, le moyen d'analyse et de commande interroge ou détermine l'état du catalyseur 40, à savoir s'il est amorcé (mode actif de traitement des gaz polluants) ou non. S'il n'est pas amorcé, on cherche à élever sa température jusqu'au moins sa température d'amorçage (son mode de fonctionnement devient alors actif). Lorsque le catalyseur 40 est en mode actif, alors on peut considérer l'état de charge en particules du filtre à particules 41, à savoir si le seuil de niveau de charge en particules est atteint ou non. S'il est atteint, on réalise la régénération du filtre à particules 41, via notamment un apport accru en oxygène pour brûler les particules, en augmentant la température du filtre 41 si cette température n'a pas encore atteint la température de régénération.

Sinon, si le filtre à particules 41 n'a pas atteint son seuil de niveau de charge en particules, on considère la température du catalyseur 40 pour amener cette dernière à un niveau de température dans lequel un roulage tout électrique (uniquement à l'aide de la source hybride) est possible pendant une durée prédéterminée t variant de plusieurs minutes à plus d'une heure, en fonction de divers paramètres propres au véhicule et/ou externes à ce dernier. En effet, tant que le seuil de niveau de charge en particules n'est pas atteint, la stratégie de chauffe du catalyseur 40, d'abord pour son amorçage puis pour l'amener à une température de chauffe permettant une apnée électrique (sans l'utilisation du moteur thermique 2), est celle suivie par le moyen d'analyse et de commande. Dès que le seuil de niveau de charge en particules est atteint/détecté, le catalyseur 40 étant amorcé (mode actif), alors la stratégie prioritaire devient la régénération du filtre à particules 41, par son chauffage éventuel pour atteindre sa température de régénération et par apport accru en oxygène permettant la combustion des particules.

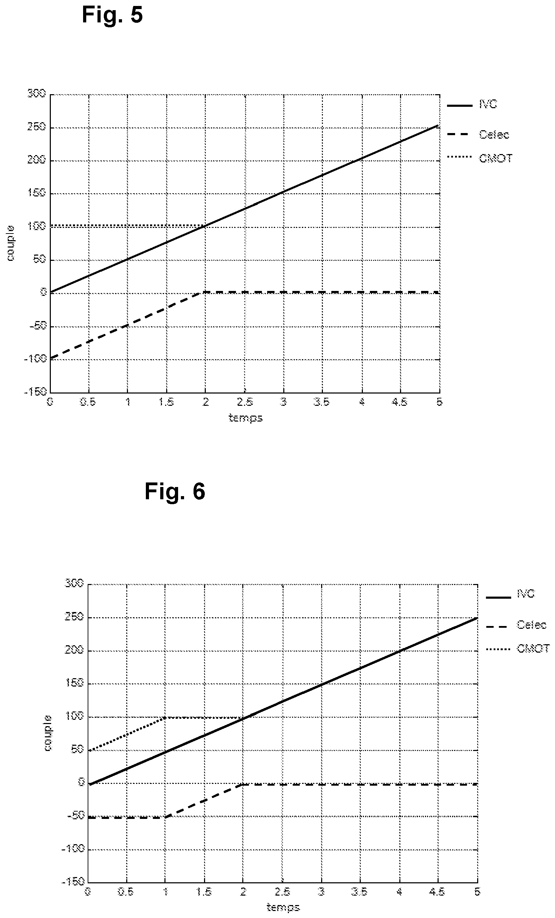

Dans les deux exemples choisis pour illustrer le cas B2, sur les figures 5 et 6, la stratégie impose un couple du moteur thermique 2 de 100 Nm (Newton Mètre). Pour respecter l'Interprétation de la demande de puissance motrice instantanée de la part du conducteur (désignée IVC), la machine/moteur électrique complète le couple manquant.

Sur la figure 5, la machine électrique prélève, de façon dégressive, du couple moteur thermique 2 (noté CMOT sur les figures 5 et 6) jusqu'à deux secondes (pour charger les batteries) afin que le moteur thermique 2 puisse réaliser ce couple minimal de 100 Nm. Comme cela est visible sur cette figure, à partir de deux secondes, la demande de puissance motrice instantanée de la part du conducteur est supérieure au couple minimal, ici défini à 100 Nm, du couple moteur thermique 2, de ce fait la machine électrique (sur les figures 5 et 6, le couple électrique est noté C_{elec}) ne prélève plus de couple au moteur thermique 2. Par ce biais, l'utilisation du couple moteur thermique se fait au juste nécessaire.

Durant cet exemple représenté sur la figure 5, le moteur thermique 2 a chauffé le filtre à particules 41 et le catalyseur 40 mais il n'y pas eu de dégradation d'avance et donc le rendement de combustion a pu rester optimal. L'expression « dégradation d'avance » est bien connu de l'homme du métier et signifie que l'on envoie plus de carburant et d'air dans la chambre de combustion de sorte qu'une partie de la combustion est réalisée dans la ligne d'échappement, ce qui a pour conséquence bénéfique de chauffer très rapidement notamment le filtre à particules 41 mais également pour conséquence négative une surconsommation de carburant fossile et une libération momentanément plus importante de gaz polluants. Aussi, cette solution extrême pour chauffer la ligne d'échappement (le catalyseur 40 et le filtre à particules 41) n'est pas souhaitable et est évité autant que possible grâce au système et procédé selon l'invention.

Sur la figure 6, la limitation de la machine électrique est défini à -50 Nm étant donné que le couple électrique est saturé (la batterie électrique étant pleine, elle ne peut plus recevoir/stocker d'énergie). La demande de puissance motrice instantanée de la part du conducteur étant prioritaire sur le besoin de chauffe du filtre à particules 41, on ne peut pas satisfaire le couple minimal (du moteur thermique 2) requis pour la chauffe (soit ici 100 Nm) entre zéro (0) et une (1) seconde.
- B3 : GPF.

Le catalyseur 40 est amorcé mais il subsiste un besoin de chauffe, le filtre à particules 41 est chargé et est en mesure de se régénérer en cas de présence d'oxygène. Dans cette situation, la priorité est donnée au filtre à particules 41 car le niveau de particules est vraisemblablement proche d'un niveau critique. Le couple minimal à respecter pour chauffer le catalyseur 40 n'est donc plus respecter, on essaie alors de maximiser l'apport d'oxygène dans la ligne d'échappement afin de régénérer au plus vite le filtre à particules 41.

## Revendications

1. Système de pilotage de la température d'un catalyseur et d'un filtre à particules d'une ligne d'échappement de véhicule à motorisation hybride, comportant :
- un moteur thermique (2) ;
- au moins une autre source motrice (10, 18) ;
- un catalyseur (40) destiné au traitement des émissions polluantes provenant du moteur thermique (2), ledit catalyseur (40) présentant une température d'amorçage à partir de laquelle ledit catalyseur (40) est en mode actif dans lequel ledit traitement est réalisé ;
- un filtre à particules (41) destiné au traitement des émissions polluantes provenant du moteur thermique (2), ledit filtre présentant une température de régénération au-delà de laquelle une combustion desdites particules est possible, le filtre à particules (41) et le catalyseur (40) étant chauffés lors de l'utilisation du moteur thermique (2), et
- un moyen d'analyse et de commande configuré pour déterminer un niveau de charge en particules du filtre à particules (41) ainsi qu'une température dudit catalyseur (40) et dudit filtre (41),
**caractérisé en ce que** le moyen d'analyse et de commande est configuré pour piloter la température du catalyseur (40), en fonction d'une demande de puissance motrice instantanée de la part du conducteur et d'une sollicitation de l'autre source motrice (10, 18), de sorte qu'elle est toujours au moins égale à la température d'amorçage et, lorsqu'un seuil de niveau de charge en particules du filtre à particules (41) est déterminé comme atteint, le moyen d'analyse et de commande est configuré pour commander le moteur thermique (2) de manière à ce que le filtre à particules (41) atteigne la température de régénération afin d'être régénéré.

2. Système selon la revendication 1, **caractérisé en ce que** le moyen d'analyse et de commande est configuré pour piloter la température du catalyseur (40), en fonction d'une demande de puissance motrice instantanée de la part du conducteur et d'une sollicitation de l'autre source motrice (10, 18), de sorte qu'elle atteigne une température de seuil du catalyseur (40), ladite température de seuil atteinte autorisant, via une commande par le moyen d'analyse et de commande, l'arrêt du chauffage du catalyseur (40) pendant une durée prédéterminée tout en le maintenant en mode actif.

3. Système selon la revendication 2, **caractérisé en ce que** les températures d'amorçage, de régénération et de seuil sont prédéfinies et stockées dans le moyen d'analyse et de commande.

4. Système selon la revendication 2 ou 3, **caractérisé en ce que** la durée prédéterminée est variable.

5. Système selon la revendication 4, **caractérisé en ce que** la variabilité de la durée prédéterminée est fonction de la température extérieure, de l'altitude et/ou de la nature du catalyseur (40).

6. Système selon l'une des revendications 2 à 5, **caractérisé en ce que** la durée prédéterminée est comprise entre 3 minutes et 60 minutes.

7. Système selon l'une quelconque des revendications précédentes, **caractérisé en ce que** le seuil de niveau de charge en particules du filtre à particules (41) est au moins égal à 70% de la capacité de charge maximum du filtre à particules (41).

8. Système selon l'une quelconque des revendications précédentes, **caractérisé en ce que** l'autre source motrice (10, 18) consiste en au moins un moteur électrique.

9. Véhicule automobile hybride, **caractérisé en ce qu'**il comporte au moins un système de pilotage selon l'une quelconque des revendications précédentes.

10. Procédé de pilotage de la température d'un catalyseur d'une ligne d'échappement de véhicule à motorisation hybride, dans lequel :
- un catalyseur (40) destiné au traitement des émissions polluantes provenant du moteur thermique (2), ledit catalyseur (40) présentant une température d'amorçage à partir de laquelle ledit catalyseur (40) est en mode actif dans lequel ledit traitement est réalisé; et
- un filtre à particules (41) destiné au traitement des émissions polluantes provenant du moteur thermique (2), ledit filtre présentant une température de régénération au-delà de laquelle une combustion desdites particules est possible,
sont chauffés lors de l'utilisation d'un moteur thermique (2),
**caractérisé en ce qu'**on pilote la température du catalyseur (40), en fonction d'une demande de puissance motrice instantanée de la part du conducteur et d'une sollicitation de l'autre source motrice (10, 18), de sorte qu'elle est toujours au moins égale à la température d'amorçage, et, lorsqu'un seuil de niveau de charge en particules du filtres à particules est déterminé comme atteint, on commande le moteur thermique (2) de manière à ce que le filtre à particules (41) atteigne la température de régénération afin d'être régénéré.

## Patentansprüche

1. System Steuerung von der Temperatur eines Katalysators und einem Partikelfilters einer Fahrzeugabgasanlage mit einem Hybridmotor, umfassend :
- eine Wärmekraftmaschine (2) ;
- zumindest einen weiteren Kraftquelle (10, 18) ;
- ein Katalysator (40) für die Behandlung der Schadstoffemissionen aus dem Motor (2), die genannten Katalysator (40) mit einer Brenntemperatur, bei der dem Katalysator (40) ist, im aktiven Modus, in dem die Behandlung durchgeführt wird ;
- ein Partikelfilter (41) für die Behandlung vorgesehenen Emissionen ausgehend von der Wärmekraftmaschine (2) verschmutzen, wobei die Filter eine Regenerationstemperatur aufweisen, über die hinaus die Verbrennung des genannten Partikels ist möglich, die Partikelfilter (41) und der Katalysator (40) heizen s bei Verwendung der Wärmekraftmaschine (2),
und
- ein Analyse und Steuermittel konfiguriert ist, um festzustellen, ein Niveau von Partikeln Last des Partikelfilters (41) als auch eine Temperatur des genannten Katalysators (40) und von dem Filter (41),
**dadurch gekennzeichnet, dass** die Analyse und Steuermittel konfiguriert sind, um die Temperatur des Katalysators (40) als Funktion einer momentanen Antriebsleistungsanforderung des Fahrers und einer Anforderung des anderen Quellmotors (10, 18) zu steuern, um sicherzustellen, dass es ist immer mindestens gleich die Initiationstemperatur und, wenn eine Last Schwellwertpegel des partikulären Partikelfilter (41) wird bestimmt, erreicht zu sein , die mittels Analyse und Steuerung so konfiguriert sind, zu steuern, um den Motor (2), so dass eine der partikuläre Filter (41) erreicht die zu regenerierende Regenerationstemperatur.

2. System nach Anspruch 1, **dadurch gekennzeichnet, dass** die Analyse und Steuermittel konfiguriert sind, zu steuern, um die Temperatur des Katalysators (40), in Abhängigkeit von einer momentanen Antriebskraft Nachfrage seitens des Fahrers und eine Spannung des anderen Fahr Quelle (10, 18), so dass sie eine erreicht Schwellentemperatur des Katalysators (40), wobei die Schwellentemperatur erreicht ermöglicht, über einen Befehl durch die Analyse und Steuermittel, die Erwärmung des Katalysators zu stoppen (40) für einen vorbestimmte Zeit, während es im aktiven Modus bleibt.

3. System nach Anspruch 2, **dadurch gekennzeichnet, dass** die Vorlauf, Regenerations und Schwellentemperaturen vordefiniert und in den Analyse und Steuermitteln gespeichert sind.

4. System nach Anspruch 2 oder 3, **dadurch gekennzeichnet, dass** die vorgegebene Dauer variabel ist.

5. System nach nach Anspruch 4, **dadurch gekennzeichnet, dass** das Schwankungsweite vorbestimmte von der Außentemperatur abhängig ist, die Höhe und/oder die Art des Katalysators (40).

6. System nach einem der Ansprüche 2 bis 5, **dadurch gekennzeichnet, dass** die vorgegebene Dauer zwischen 3 Minuten und 60 Minuten beträgt.

7. System nach einem der vorhergehenden Ansprüchen, **dadurch gekennzeichnet, dass** der partikuläre Filter (41) Lastpegelschwelle ist mindestens gleich 70% der maximalen Belastbarkeit des Partikelfilters (41).

8. System nach einem der vorhergehenden Ansprüche, **dadurch gekennzeichnet, dass** die andere Motorquelle (10, 18) aus mindestens einem Elektromotor besteht.

9. Hybrid-Kraftfahrzeug, **dadurch gekennzeichnet, dass** es mindestens ein Steuerungssystem nach einem der vorhergehenden Ansprüche umfasst.

10. Verfahren zur Temperaturregelung eines Katalysators einer Abgasleitung eines Hybridkraftfahrzeugs, bei dem :
- ein Katalysator (40) für die Behandlung der Schadstoffemissionen aus dem Motor (2), wobei der Katalysator (40) mit einer Brenntemperatur, bei der dem Katalysator (40) ist, im aktiven Modus, in dem der Behandlung realisiert wird ; und
- einen Partikelfilter (41), der für die Behandlung von Schadstoffemissionen bestimmt ist, die von der Wärmekraftmaschine (2) stammen, wobei der Filter eine Regenerationstemperatur hat, oberhalb derer eine Verbrennung der Partikel möglich ist,
bei Verwendung von der Wärmekraftmaschine (2),
**dadurch gekennzeichnet, dass** die Temperatur des Katalysators (40) gesteuert wird, in Abhängigkeit von einer momentanen Antriebsleistungsforderung von dem Fahrer und eine Anforderung von der anderen Antriebsquelle (10, 18), dass sie immer zumindest gleich zu der Initiierungstemperatur, und wenn eine Last Schwellwertpegel Partikel des Partikelfilters bestimmt wird, erreicht zu sein, sie steuert den Motor (2), so dass der
Partikelfilter (41) gelangt die Regenerationstemperatur, um regeneriert zu werden.

## Claims

1. System control of the temperature of a catalyst and a particulate filter of a vehicle exhaust system with a hybrid engine, comprising :
- a heat engine (2) ;
- at least one other motor source (10, 18) ;
- a catalyst (40) for the treatment of pollutant emissions from the engine (2),
the said catalyst (40) having a firing temperature at which said catalyst (40) is in active mode in which said treatment is carried out ;
- a particle filter (41) intended for the treatment of polluting emissions originating from the heat engine (2), said filter having a regeneration temperature beyond which combustion of said particles is possible, the particle filter (41) and the catalyst (40) being heated when using the heat engine (2), and
- an analysis and control means configured to determine a level of particulate matter load of the particulate filter (41) as well as a temperature of said catalyst (40) and of said filter (41),
**characterized in that** the analysis and control means are configured to control the temperature of the catalyst (40), as a function of an instantaneous motive power demand from the driver and a request from the other source motor (10, 18), to ensure that it is always at least equal to the initiation temperature and when a load threshold level of the particulate particle
filter (41) is determined to have been reached, the means analysis and control is configured to control the engine (2) so that an the particulate filter (41) reaches the temperature of regeneration to be regenerated.

2. System according to claim 1, **characterized in that** the analysis and control means are configured to control the temperature of the catalyst (40), as a function of an instantaneous motive power demand on the part of the driver and of a stress of the other driving source (10, 18), so that it reaches
a threshold temperature of the catalyst (40), said threshold temperature reached allowing, via a command by the analysis and control means, the stopping the heating of the catalyst (40) for a predetermined time while keeping it in active mode.

3. System according to claim 2, **characterized in that** the priming, regeneration and threshold temperatures are predefined and stored in the analysis and control means.

4. System according to claim 2 or 3, **characterized in that**
the predetermined duration is variable.

5. System according to claim 4, **characterized in that** the length variability predetermined depends on the outside temperature, altitude and/or the nature of the catalyst (40).

6. System according to one of Claims 2 to 5, **characterized in that** the predetermined duration is between 3 minutes and 60 minutes.

7. System according to any one of the preceding claims, **characterized in that** the particulate filter (41) level of charge level threshold is at least equal to 70% of the maximum charge capacity of the particulate filter (41).

8. System according to any one of the preceding claims, **characterized in that** the other motor source (10, 18) consists of at least one electric motor.

9. Hybrid motor vehicle, **characterized in that** it comprises at least one control system according to any one of the preceding claims.

10. Process for controlling the temperature of a catalyst of an exhaust line of a hybrid motor vehicle, in which :
- a catalyst (40) for the treatment of pollutant emissions from the engine (2), said catalyst (40) having a firing temperature at which said catalyst (40) is in active mode in which said treatment is realised ; and
- a particulate filter (41) intended for the treatment of polluting emissions originating from the heat engine (2), said filter having a regeneration temperature beyond which combustion of said particles is possible,
are heated when using a heat engine (2),
**characterized in that** the temperature of the catalyst (40) is controlled, as a function of an instantaneous motive power demand from the driver and of a request from the other motive source (10, 18), so that it is always at least equal to the initiation temperature, and when a load threshold level particles of the particulate filter is determined to have been reached, it controls the engine (2) so that the particulate filter (41) reaches the regeneration temperature in order to be regenerated.
